# EUROPÄISCHE PATENTANMELDUNG

(11) **EP 1 099 898 A1**
(43) Veröffentlichungstag der Anmeldung: **16.05.2001**
(21) Anmeldenummer: 00123969.8
(22) Anmeldetag: 03.11.2000
(51) Int. Cl.: F16L 51/02

(54) **Einrichtung zum Ausgleich der Bewegung zweier miteinander druckdicht zu verbindender Rohre**

(30) Priorität: 10.11.1999 DE 19953989
(71) Anmelder: STENFLEX Rudolf Stender GmbH, 22851 Norderstedt (DE)
(72) Erfinder: Lang, Werner, Dipl.-Ing., 23816 Leezen (DE)
(74) Vertreter: Niedmers, Ole, Dipl.-Phys.

(57) **Zusammenfassung**

Es wird eine Einrichtung (Kompensator) (10) zum Ausgleich der Bewegung zweier miteinander druckdicht zu verbindender Rohre vorgeschlagen, umfassend einen mit beidseitig rohrförmigen Ansätzen (11, 12) ausgebildeten Balgkörper (13), wobei die Ansätze (11, 12) mit jeweils einem Element (14) zum Anschluß an das jeweilige Rohr versehen sind. Das Element (14) besteht aus dem Ansatz (11; 12) des Balgkörpers (13) außen umschließenden Ringkörper (15) und aus einem innen im wesentlichen bis in den Bereich (16) des Ringkörpers (15) in den Ansatz (11; 12) des Balgkörpers (13) hineingreifenden Anschlußkörper (17).

## Beschreibung

Die Erfindung betrifft eine Einrichtung (Kompensator) zum Ausgleich der Bewegung zweier miteinander druckdicht zu verbindender Rohre, umfassend einen mit beidseitig rohrförmigen Ansätzen ausgebildeten Balgkörper, wobei die Ansätze mit jeweils einem Element zum Anschluß an das jeweilige Rohr versehen sind.

Derartige Einrichtungen, die auch kurz Kompensatoren genannt werden, werden in Rohrleitungssystemen von Industrieanlagen, im Schiffbau, in Kraftwerken, aber auch in der Haustechnik als zuverlässige flexible Rohrverbindung verwendet. Sie sind faktisch Bewegungsausgleicher in Rohrleitungen, an Pumpen, Motoren, Turbinen, Maschinen, Apparaten und Behältern und können zugleich auch als Ausgleichsstücke für Montageungenauigkeiten, als Anbaustücke an Armaturen oder als Wandabdichtungen an Rohrdurchführungen verwendet werden.

Die Elemente, mit denen die Einrichtung, im folgenden kurz Kompensator genannt, mit den jeweiligen zu verbindenden Rohren verbunden werden, bestehen bei vielen Arten der Kompensatoren aus Flanschen oder Gewindeanschlußteilen und werden über diese mit dem jeweiligen Rohr verbunden. Bei sogenannten Gummikompensatoren erfolgt eine kraft- und formschlüssige Verbindung der Balgkörper mit den Anschlußelementen in Form von Metallflanschen und Metallgewindeanschlußteilen beispielsweise über an den Balgkörper angeformte wulstartige Gummiflansche.

Derartige Klemmverbindungen zwischen den Ansätzen der Balgkörper und Metallgewindeanschlüssen erfordern großformatige Schraubteile, die demzufolge einen großen Platzbedarf aufweisen. Hinzu kommt, daß die Fertigung von Schraubteilen, die regelmäßig aus Metall bestehen, bei den Kompensatoren einen beträchtlichen Kostenfaktor darstellen, dennoch aber, sie regelmäßig aus Temperguß hergestellt werden, selbst gegen Korrosion nicht ausreichend geschützt sind. Die Schraubteile werden zudem in gesonderten Herstellungsschritten hergestellt und müssen auf den Balgkörper montiert werden, was regelmäßig manuell geschehen muß und dieses demzufolge arbeitsufwendig und damit kostenträchtig ist. Schließlich sind die Schraubteile auch, da sie regelmäßig aus Meall, hier im Beispiel aus Temperguß, hergestellt werden, sehr schwer, so daß deren Handhabung bei der Montage mit dem Balgkörper und der Montage des fertiggestellten Kompensators in ein bestehendes Rohrleitungssystem nur mit Hilfsmitteln möglich ist.

Es ist somit Aufgabe der vorliegenden Erfindung, eine Einrichtung bzw. einen Kompensator der eingangs genannen Art zu schaffen, der in bezug auf die Verbindbarkeit mit den Rohren weniger Platz benötigt, dessen Gewicht gegenüber den bekannten Balgkörpern bzw. den Verbindungselementen der Balgkörper erheblich vermindert ist, der eine verbesserte Korrosionsbeständigkeit aufweist, der regelmäßig ohne aufwendige Werkzeuge am Einsatzort montiert werden kann und dessen Herstellungskosten gegenüber bekannten Kompensatoren erheblich reduziert sind.

Gelöst wird die Aufgabe gemäß der Erfindung dadurch, daß das Element aus einem dem Ansatz des Balgkörpers außen umschließenden Ringkörper und aus einem innen im wesentlichen bis in den Bereich des Ringkörpers in den Ansatz des Balgkörpers hineingreifenden Anschlußkörper besteht.

Der Vorteil der erfindungsgemäßen Lösung besteht im wesentlichen darin, daß der erfindungsgemäße Kompensator sehr viel einfacher und damit kostengünstiger ausbildbar ist als bisher im Stand der Technik bekannt, da einerseits der Balgkörper selbst mit seinen beiden Ansätzen und andererseits die Anschlußelemente, zuvor als gesonderte Teile gefertigt, leicht miteinander verbunden werden können, und zwar ggf. auch erst unmittelbar am Ort des Einsatzes. Die Montage der Anschlußelemente, die bei den bisherigen Kompensatoren schon werkseitig aufgrund der dafür zwingend notwendigen Werkzeuge erforderlich war, kann, ggf. mit einem geeigneten Hilfswerkzeug, unmittelbar am Einsatzort auch durch den normalen Fachmann, d.h. nicht durch den speziell für die Montage der Kompensatoren notwendigen Spezialfachmann, der bisher werkseitig bereitgestellt werden mußte, erfolgen.

Erfindungsgemäß sind vorteilhafterweise solche Konstruktionen möglich, daß eine sehr viel kleinere Bauform bei gleich großem Balgkörper des Kompensators erzielt werden kann. Dieses führt wiederum zur Verminderung des Gewichts und damit auch der Herstellungskosten.

Um auf einfache Weise sicherstellen zu können, daß der Ringkörper bei seinem Aufbringen auf den Ansatz des Balgkörpers auf maximal mögliche Weise, aber dann nicht weiter, auf den Ansatz zu verschiebbar ausgebildet ist, ist der Ringkörper vorzugsweise an seiner einen Öffnungsseite ringflanschartig zur Begrenzung der Stirnseite des Ansatzes ausgebildet. Zudem ist durch diese Maßnahme eine Aufweitung des offenen Endes des rohrförmigen Ansatzes, was ggf. zum Undichtwerden der Verbindung zwischen Balgkörper und Anschlußelement führen könnte, von vornherein ausgeschlossen.

Um sicherzustellen, daß der Ringkörper nach seinem Aufbringen auf dem rohrförmigen Ansatz fortwährend fest in dieser Stellung verharrt, ist die Innenfläche des Ringkörpers wenigstens teilweise mit einem Eingriffsmittel zum Eingriff in die Außenoberfläche des Ansatzes versehen.

Gleiches gilt sinngemäß auch für den Anschlußkörper, denn dieser ist vorzugsweise derart ausgebildet, daß der bis in den Bereich des Ringkörpers hineingreifende Abschnitt des Anschlußkörpers wenigstens teilweise mit einem Eingriffsmittel zum Eingriff in die Innenoberfläche des Ansatzes versehen ist. Die Eingriffsmittel des Anschlußkörpers und die Eingriffsmittel des Ringkörpers ergreifen die rohrförmigen Ansätze des Balgkörpers innen und außen und stellen somit eine hervorragende Sicherung gegen axiale und/oder radiale Bewegungen des Balgkörpers bzw. der anschließenden Rohre an den Balgkörper sicher, und zwar auch bei Druckschwankungen des im Balgkörper geförderten Mediums.

Die Eingriffsmittel selbst können auf viele geeignete Weise ausgebildet sein und werden letztlich auch in Abhängigkeit des Werkstoffs, der den Balgkörper bzw. die rohrförmigen Ansätze des Balgkörpers bildet, ausgewählt. Eine Auswahl bzw. Ausbildung der Eingriffsmittel kann auch in Abhängigkeit des durch den Balgkörper geführten Mediums erfolgen. Vorteilhafterweise sind beispielsweise Eingriffsmittel nach Art eines Gewindes und/oder nach Art einer Rillung oder Riffelung möglich, wobei die Dimensionen der Eingriffsmittel bei dem Ringkörper einerseits und dem Anschlußkörper andererseits unterschiedlich groß gewählt werden können. Die Verbindung des Kompensators mit den Rohren oder sonstigen Dritteinrichtungen, zwischen denen der erfindungsgemäße Kompensator eingebaut werden soll bzw. kann, kann grundsätzlich auf verschiedene geeignete Weise erfolgen, beispielsweise vorzugsweise dadurch, daß der Kompensator einen vom Ansatz abgewandten Teil des Anschlußkörpers mit einem dort ausgebildeten Außengewinde aufweist. Auf diese Weise ist beispielsweise eine Überwurfmutter, die auf den Rohren oder Dritteinrichtungen vorgesehen sein kann, auf einfache Weise auf das Außengewinde des Kompensators aufschraubbar.

Es ist aber bei einer weiteren vorteilhaften Ausgestaltung des Kompensators auch möglich, daß der vom Ansatz abgewandte Teil des Anschlußkörpers ein Innengewinde aufweist, so daß beispielsweise der Kompensator mit dem Innengewinde in das jeweilige zu verbindende Rohr bzw. die Dritteinrichtung eingeschraubt werden kann. Vorzugsweise ist es dabei auch möglich, beide Anschlußkörper des Kompensators mit unterschiedlichen Gewindedrehrichtungen, d.h. den einen Anschlußkörper mit einem Linksgewinde und den anderen Anschlußkörper mit einem Rechtsgewinde, zu versehen, so daß beide zu verbindende Rohre bzw. beide zu verbindenden Dritteinrichtungen selbst nicht bei der Montage bzw. Demontage des erfindungsgemäßen Kompensators gedreht zu werden brauchen, da die Verbindung bzw. das Lösen mit dem Kompensator bzw. des Kompensators durch entsprechende Drehung des Kompensators selbst möglich ist.

Um die Montage bzw. Demontage zu erleichtern, weist der vom Ansatz abgewandte Teil des Anschlußkörpers einen Schlüsselansatz auf, so daß beispielsweise mittels Standard-Maulschlüsseln und dergleichen eine einfache Montage bzw. Demontage möglich ist.

Schließlich ist es bei einer noch weiteren anderen vorteilhaften Ausgestaltung des Kompensators möglich, den vom Ansatz abgewandten Teil des Anschlußkörpers mit einer damit dichtend und drehbar verbundenen Überwurfmutter zu versehen, so daß bei der Montage bzw. der Demontage des derart ausgebildeten Kompensators weder eine Drehung der zu verbindenden Rohre bzw. Dritteinrichtungen noch eine Drehung des Kompensators selbst nötig ist.

Die Überwurfmutter selbst ist dabei mit einem Innengewinde versehen, es ist aber auch grundsätzlich möglich, die Überwurfmutter quasi als Renkverbindungsmittel auszubilden, wobei das entsprechende Gegenstück der Renkverbindung zum beiderseitigen Eingriff auf dem zu verbindenden Rohr bzw. auf der mit dem Kompensator zu verbindenden Dritteinrichtung vorgesehen ist.

Die Erfindung wird nun unter Bezugnahme auf die nachfolgenden schematischen Zeichnungen anhand mehrerer Ausführungsbeispiele eingehend beschrieben. Darin zeigen:
- Fig. 1: im Teilschnitt eine Einrichtung bzw. einen Kompensator der gattungsgemäßen Art,
- Fig. 2: den Ansatz eines erfindungsgemäßen Balgkörpers im Teilschnitt,
- Fig. 3: den Ansatz des erfindungsgemäßen Balgkörpers im Teilschnitt gemäß einer gegenüber der Darstellung von Fig. 2 modifizierten Ausführungsform und
- Fig. 4: den Ansatz des erfindungsgemäßen Balgkörpers im Teilschnitt in einer noch anderen modifizierten Ausführungsform der Erfindung.

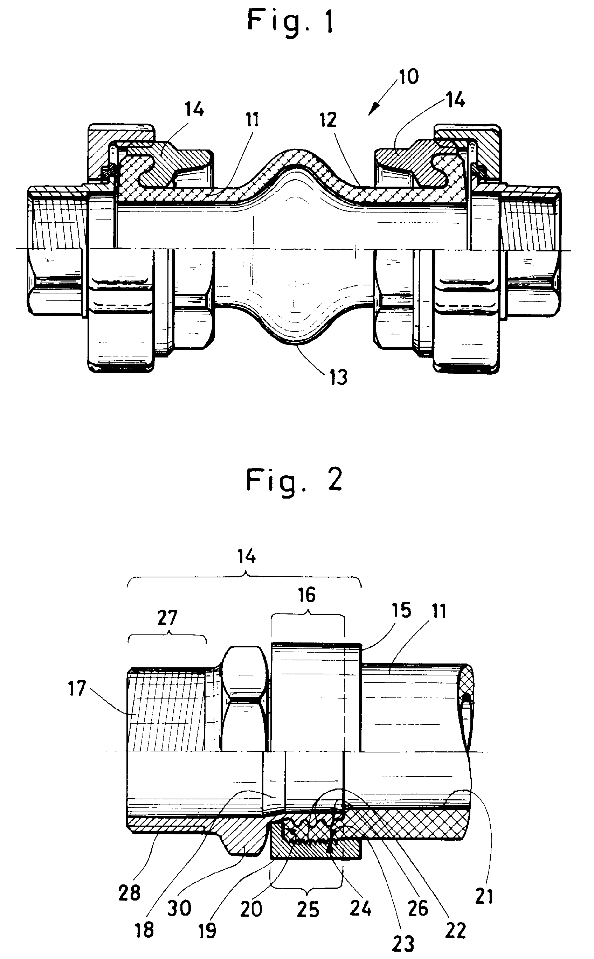

Es wird zunächst Bezug genommen auf die Darstellung von Fig. 1. In Fig. 1 ist eine Einrichtung bzw. ein Kompensator 10 dargestellt, wie er gattungsgemäß bisher im Stand der Technik verwirklicht ist. Der Kompensator 10 gemäß der Erfindung weist bezüglich seines grundsätzlichen Aufbaus einen gleichen bzw. ähnlichen Aufbau auf, so daß die nachfolgende kurze Darstellung des Aufbaus des bekannten Kompensators 10 auch für den erfindungsgemäßen Kompensator 10 gilt und darauf insoweit auch im Zusammenhang mit der Beschreibung des erfindungsgemäßen Kompensators 10 Bezug genommen wird.

Der Kompensator 10 weist einen Balgkörper 13 auf, der aus geeigneten elastischen Werkstoffen bestehen kann, beispielweise Gummi oder anderen Elastomeren. Zu beiden Seiten des Balgkörpers 13 sind rohrförmige Ansätze 11, 12 vorgesehen, die jeweils mit einem Anschlußelement 14 an den jeweiligen Enden der Ansätze 11, 12 ausgebildet sind. Beim Kompensator 10 gemäß Fig. 1 sind die Anschlußelemente 14 aus jeweils einstückigen gesonderten Formteilen, die regelmäßig aus Metall bzw. Metallguß bestehen, hergestellt, die eine umlaufende Nut aufweisen, in die das entsprechend ausgebildete Ende der rohrförmigen Ansätze nasenförmig eingreift. Für das Aufbringen der Anschlußelemente 14 sind werkseitig vorhandene Montagewerkzeuge nötig, um für eine kraftschlüssige, drucksichere und vibrationsfeste Verbindung zwischen den Ansätzen 11, 12 und den Anschlußelementen 14 zu sorgen.

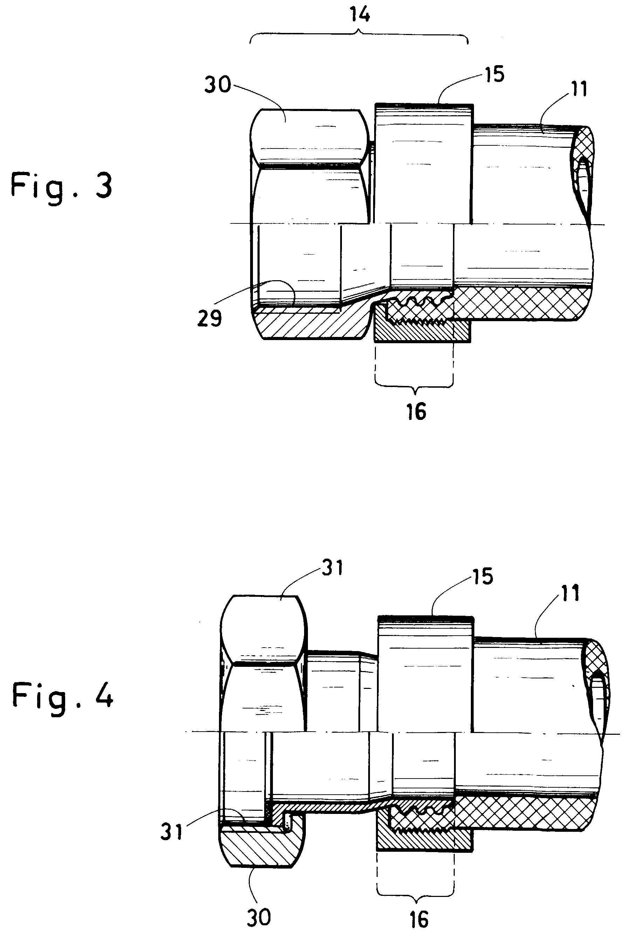

Der erfindungsgemäße Kompensator 10, vergleiche zunächst Fig. 2, ist auf beiden Seiten, d.h. auf beiden rohrförmigen Ansätzen 11, 12, mit dem erfindungsgemäß ausgebildeten Anschlußelement 14 verbunden. Da beide Seiten des Kompensators 10 regelmäßig - aber nicht zwingend - mit dem erfindungsgemäßen Anschlußelement 14 versehen sind, ist in Fig. 2 und in den nachfolgenden Fig. 3 und 4 lediglich eine Seite, d.h. ein rohrförmiger Ansatz 11; 12 des Balgkörpers 13 dargestellt.

Beim Kompensator 10 gemäß Fig. 2 besteht das Element 14 aus zwei Teilelementen, nämlich einem Ringkörper 15 und einem Anschlußkörper 17. Der Ringkörper 15 umschließt dabei den Ansatz 11; 12 des Balgkörpers 13 außen. Der Anschlußkörper 17 selbst greift innen im wesentlichen bis in den Bereich 16 des Ringkörpers 15 in den Ansatz 11; 12 des Balgkörpers 13 hinein. Der Ringkörper 15 selbst ist an seiner Öffnungsseite 18 mit einem ggf. damit integralen Ringflansch 19 versehen. Der Ringflansch 19 stellt eine Begrenzung der Stirnseite 20 des Ansatzes 11; 12 dar. Sowohl die Innenfläche 24 des Ringkörpers 15 als auch der bis in den Bereich 16 des Ringkörpers 15 hineingreifen könnende Abschnitt 25 des Anschlußkörpers 17 weisen Eingriffsmittel 22 auf. Die Eingriffsmittel 22 stehen in Eingriff mit der Außenoberfläche 23 des Ansatzes 11; 12, d.h. die des Ringkörpers 15, und mit der Innenoberfläche 26 des Ansatzes 11; 12, d.h. die des Anschlußkörpers 17.

Die Eingriffsmittel 22 können dabei nach Art eines Gewindes, ggf. eines konischen Gewindes, ausgebildet sein, vergleiche die Fig. 2 bis 4. Ggf. kann ein zusätzliches textiles, flüssiges oder filmartiges Dichtmittel zwischen dem Eingriffsmittel 22 und den rohrförmigen Ansätzen 11, 12 vorgesehen sein, so daß eine ggf. zusätzliche Dichtwirkung und/oder Verpressung erreicht wird. Es können aber auch andere, hier nicht gesondert dargestellte Eingriffsmittel vorgesehen werden, beispielsweise Riffelungen und/oder Rillungen oder auch um den jeweiligen Innenumfang des Ringkörpers 15 bzw. den jeweiligen Außenumfang des Anschlußkörpers 17 angeordnete zackenartige Vorsprünge und dergleichen. Das Eingriffsmittel 22, insbesondere am Anschlußkörper 17, kann eine konzentrische Rillung sein nach Art hintereinanderliegender Ringabdichtungen, die eine Labyrinthdichtung bilden.

Der Anschlußkörper 17 kann, wenn ein drehendes Einbringen des Ringkörpers 15 in den Innenraum des rohrförmigen Abschnitts des Kompensators 10 nicht möglich ist, beispielsweise in dem Fall, bei dem als Eingriffsmittel 22 die vorbeschriebenen zackenförmigen Vorsprünge auf der hineingreifenden Außenfläche des Anschlußkörpers 17 in die Innenoberfläche 26 des Ansatzes 11, 12 vorgesehen sind, mit Untermaß in den Ansatz 11; 12 eingebracht und beispielsweise werkseitig mit einem geeigneten Werkzeug aufgeweitet werden, so daß eine kraftschlüssige Verbindung zwischen dem Anschlußkörper 17 und dem rohrförmigen Ansatz 11; 12 erreicht wird. Es versteht sich von selbst, daß zuvor natürlich auf das Ende des jeweiligen rohrförmigen Ansatzes 11; 12 der Ringkörper 15 aufgebracht worden ist, so daß für das Aufweiten ein Gegenlager zur Verfügung steht. Denkbar ist es auch, neben den Eingriffsmitteln 22 zusätzlich auch eine Klebeverbindung, die zusätzlich auch noch dichtende Wirkung haben kann, zwischen der Innenoberfläche 21 der rohrförmigen Ansätze 11; 12 und des entsprechenden hineingreifenden Abschnitts 25 des Anschlußkörpers 17 vorzusehen.

Beim Kompensator 10 gemäß Fig. 2 ist am vom Ansatz 11; 12 abgewandten Teil 27 des Anschlußkörpers 17 ein Außengewinde 28 vorgesehen.

Fig. 3 zeigt eine modifizierte Ausführungsform des erfindungsgemäßen Kompensators 10, bei dem bei ansonsten gleichem Aufbau wie dem gemäß Fig. 2 anstelle des Außengewindes 28 ein Innengewinde 29 vorgesehen ist. Bei beiden Ausgestaltungen des Kompensators 10 gemäß Fig. 2 und 3 ist am Anschlußkörper 17 ein Schlüsselansatz 30 vorgesehen, um beispielsweise mittels Maulschlüsseln und dergleichen eine einfache Verbindbarkeit mit den daran anzuschließenden Rohren bzw. Dritteinrichtungen zu schaffen.

Bei der Ausgestaltung des Kompensators 10 gemäß Fig. 4 ist bei ansonsten gleichem Aufbau wie dem der Kompensatoren gemäß Fig. 2 und 3 anstelle eines Außengewindes bzw. eines Innengewindes am freien Ende eine Überwurfmutter 31 vorgesehen, mit der eine dichtende Verbindung mit den daran anzuschließenden Rohren bzw. Dritteinrichtungen auf einfache Weise möglich ist, d.h. der Kompensator 10 braucht bei der Montage bzw. Demontage selbst nicht gedreht zu werden. Die Überwurfmutter 31 kann ein Innengewinde 32 mit Linksgewinde oder Rechtsgewinde aufweisen, es ist aber auch möglich, im Zusammenwirken mit den daran anzuschließenden Rohren bzw. den Dritteinrichtungen Renkverbindungsmittel vorzusehen. Auch ist es grundsätzlich möglich, den Kompensator 10 derart auszubilden, daß auf beiden rohrförmigen Ansätzen 11; 12 unterschiedliche Ausgestaltungen des Anschlußkörpers, wie im Zusammenhang mit den Fig. 2 bis 4 beschrieben, vorzusehen.

Der Schlüsselansatz 30 bei allen Ausgestaltungen des Kompensators 10, wie sie hier beschrieben worden sind, gestattet zudem bei der Montage bzw. Demontage des Kompensators 10 mit den damit zu verbindenden Rohren bzw. Dritteinrichtungen ein Festhalten des Kompensators 10, so daß eine Torsionsbeanspruchung des eigentlichen Balgkörpers 13 vermieden wird. Die Ausgestaltung des Kompensators 10 gemäß Fig. 4 mit Überwurfmutter 31 gestattet eine Verschiebung der Überwurfmutter 31 nach entsprechender Lösung vom angeschlossenen Rohr bzw. von der Dritteinrichtung in Richtung des Balgkörpers 13, so daß ein leichtes Auswechseln des Kompensators 10 in der Rohrleitung bzw. den damit zu verbindenden Dritteinrichtungen möglich ist.

Der Ringkörper 15 und der Anschlußkörper 17 einschließlich der Überwurfmutter 31 bei der Ausgestaltung des Kompensators 10 gemäß Fig. 4 können aus verschiedenen geeigneten Werkstoffen, regelmäßig metallischen Werkstoffen, was allerdings nicht zwingend ist, hergestellt werden. Sind metallische Werkstoffe gewählt, so können diese Elemente beispielsweise aus korrosionsfestem Stahl, Messing, Bronze und dergleichen hergestellt werden, wobei die Wahl des Werkstoffs ggf. auch unter dem Gesichtspunkt der einfachen mechanischen Bearbeitbarkeit erfolgt.

### Bezuqszeichenliste

- 10: Einrichtung (Kompensator)
- 11: rohrförmiger Ansatz
- 12: rohrförmiger Ansatz
- 13: Balgkörper
- 14: Element (Anschlußelement)
- 15: Ringkörper
- 16: Bereich (Ringkörper)
- 17: Anschlußkörper
- 18: Öffnungsseite (Ringkörper)
- 19: Ringflansch
- 20: Stirnseite
- 21: Innenfläche des rohrförmigen Ansatzes
- 22: Eingriffsmittel
- 23: Außenoberfläche (Ansatz)
- 24: Innenoberfläche (Ringkörper)
- 25: Abschnitt (Außenkörper)
- 26: Innenoberfläche (Ansatz)
- 27: Teil (Anschlußkörper)
- 28: Außengewinde
- 29: Innengewinde
- 30: Schlüsselansatz
- 31: Überwurfmutter
- 32: Innengewinde (Überwurfmutter)

## Patentansprüche

1. Einrichtung (Kompensator) zum Ausgleich der Bewegung zweier miteinander druckdicht zu verbindender Rohre, umfassend einen mit beidseitig rohrförmigen Ansätzen ausgebildeten Balgkörper, wobei die Ansätze mit jeweils einem Element zum Anschluß an das jeweilige Rohr versehen sind, dadurch gekennzeichnet, daß das Element (14) aus einem den Ansatz (11; 12) des Balgkörpers (13) außen umschließenden Ringkörper (15) und aus einem innen im wesentlichen bis in den Bereich (16) des Ringkörpers (15) in den Ansatz (11; 12) des Balgkörpers (13) hineingreifenden Anschlußkörper (17) besteht.

2. Einrichtung nach Anspruch 1, dadurch gekennzeichnet, daß der Ringkörper (15) an seiner einen Öffnungsseite (18) ringflanschartig (19) zur Begrenzung der Stirnseite (20) des Ansatzes (11; 12) ausgebildet ist.

3. Einrichtung nach einem oder beiden der Ansprüche 1 oder 2, dadurch gekennzeichnet, daß die Innenoberfläche (24) des Ringkörpers (15) wenigstens teilweise mit einem Eingriffsmittel (22) zum Eingriff in die Außenoberfläche (23) des Ansatzes (11; 12) versehen ist.

4. Einrichtung nach einem oder mehreren der Ansprüche 1 bis 3, dadurch gekennzeichnet, daß der bis in den Bereich (16) des Ringkörpers (15) hineingreifende Abschnitt (25) des Anschlußkörpers (17) wenigstens teilweise mit einem Eingriffsmittel (22) zum Eingriff in die Innenoberflächen (26) des Ansatzes (11, 12) versehen ist.

5. Einrichtung nach einem oder beiden der Ansprüche 3 oder 4, dadurch gekennzeichnet, daß das Eingriffsmittel (22) nach Art eines Gewindes ausgebildet ist.

6. Einrichtung nach einem oder beiden der Ansprüche 3 oder 4, dadurch gekennzeichnet, daß das Eingriffsmittel (22) nach Art einer Rillung ausgebildet ist.

7. Einrichtung nach einem oder mehreren der Ansprüche 1 bis 6, dadurch gekennzeichnet, daß ein vom Ansatz (11; 12) abgewandter Teil (27) des Anschlußkörpers (17) ein Außengewinde (28) ausweist.

8. Einrichtung nach einem oder mehreren der Ansprüche 1 bis 6, dadurch gekennzeichnet, daß ein vom Ansatz (11; 12) abgewandter Teil (27) des Anschlußkörpers (17) ein Innengewinde (29) ausweist.

9. Einrichtung nach einem oder beiden der Ansprüche 7 oder 8, dadurch gekennzeichnet, daß der vom Ansatz (11; 12) abgewandte Teil (27) des Anschlußkörpers (17) einen Schlüsselansatz (30) ausweist.

10. Einrichtung nach einem oder mehreren der Ansprüche 1 bis 6, dadurch gekennzeichnet, daß ein vom Ansatz (11; 12) abgewandter Teil (27) des Anschlußkörpers (17) mit einer damit dichtend und drehbar verbundenen Überwurfmutter (31) versehen ist.

11. Einrichtung nach Anspruch 10, dadurch gekennzeichnet, daß die Überwurfmutter (31) ein Innengewinde (32) zur Verbindung mit dem Rohr aufweist.
